# EUROPÄISCHE PATENTANMELDUNG

(11) **EP 0 950 509 A1**
(43) Veröffentlichungstag der Anmeldung: **20.10.1999**
(21) Anmeldenummer: 98103001.8
(22) Anmeldetag: 20.02.1998
(51) Int. Cl.: B32B 17/10, B44C 1/17

(54) **Mehrschichtfolie zur Beschichtung eines vorzugsweise transparenten Substrates**

(71) Anmelder: F. XAVER LEIPOLD GMBH & CO. KG, 90513 Zirndorf (DE)
(72) Erfinder: Leipold, Herbert, 90513 Zirndorf (DE); Hochleitner, Heinz, Dr., 90522 Oberasbach (DE)
(74) Vertreter: Böhme, Volker, Dipl.-Ing.

(57) **Zusammenfassung**

Verfahren zur Herstellung einer Mehrschichtfolie (12) zur Beschichtung eines transparenten Substrats (11), insbesondere von Glas, umfassend das Aufdrucken einer Sperrschicht (13) mit einer Vielzahl von in einem Raster angeordneten Sperrelementen (14) auf eine Unterlage (22); das Aufbrengen einer auf einem transparenten Substrat einbrennbaren Funktionsschicht (15) auf die Sperrschicht (13); das Einbrennen der Mehrschichtfolie (12) auf das transparente Substrat und das Entfernen der Eingebrannte Mehrschichtfolie (12) in Bereiche der Sperrelemente (14) unter Ausbildung von Sicht-Zwischenräumen (17). Eine solche bedruckte oder beschichtete Glasscheibe könnte Anwendung finden, und zwar so, daß von außen durch die Glasscheibe hindurch das aufgedruckte Design sichtbar ist, von innen hingegen aufgrund des Rasters der Sicht-Zwischenräume und der von innen sichtbaren dunklen Schicht ein Blick nach außen ermöglicht wird.

## Beschreibung

Die Erfindung betrifft eine Mehrschichtfolie zur Beschichtung eines transparenten Substrats, insbesondere aus Glas, ein beschichtetes Glas, ein Verfahren zum Herstellen einer Mehrschichtfolie und ein Verfahren zum Beschichten eines transparenten Substrats.

Aus dem Stand der Technik sind Herstellungsverfahren für Folien bekannt, die den optischen Effekt der 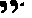 Einwegsicht" erzeugen können. Hierzu wird beispielsweise auf die GB 2 165 292 verwiesen. Grundsätzlich weisen diese Folien eine bedruckte Oberfläche und gegenüberliegend eine schwarze oder dunkle Oberfläche auf. Beispielsweise durch Stanzen ist eine regelmäßiges Raster von Löchern in die Folie eingebracht, so daß von der dunklen Seite her eine Durchsicht durch die Folie ermöglicht wird, von der bedruckten Seite her aber der optische Eindruck des aufgedruckten Bildes überwiegt. Der Effekt ist besonders gut ausgeprägt, wenn die Folie zwischen einem dunklen und einem hellen Raum so angeordnet ist, daß die bedruckte Seite dem hellen und die dunkle Seite dem dunklen Raum zugewandt ist. Hinsichtlich weiterer Einzelheiten des Effekts wird auf die GB 2 165 292 verwiesen.

Der von den beschriebenen Folien her bekannte Effekt kann auch bei der Beschichtung von Glas eingesetzt werden. Ein beschichtetes Glas, das diesen optischen Effekt ermöglichen soll, ist bereits in der EP 0 686 496 A1 beschrieben. Dort wird auf eine transparente Glasscheibe in einem vorbestimmten Raster eine mit Löchern versehene Dekorschicht direkt aufgedruckt. Dies geschieht im einzelnen wie folgt:

Zunächst wird das eigentliche Design unter Aussparung von rasterförmig angeordneten Sicht-Zwischenräumen auf die Glasscheibe aufgedruckt. Direkt auf das rasterartige Gerüst der Designschicht wird nunmehr eine weiße Schicht aufgedruckt; auf diese weiße Schicht wird anschließend eine dritte schwarze oder graue Schicht aufgedruckt. Die mit Löchern versehene Designschicht erzeugt so ein Hinterglasbild, wobei die Glasscheibe von der beschichteten Seite her aufgrund der Sicht-Zwischenräume und der dunklen Außenschicht eine Sicht durch die Glasscheibe hindurch, beispielsweise nach draußen, ermöglichen soll.

Eine so bedruckte oder beschichtete Glasscheibe könnte beispielsweise in öffentlichen Verkehrsmitteln, an Haltestellen oder an der Außenfassade von Bürohäusern Anwendung finden, und zwar so, daß von außen durch die Glasscheibe hindurch das aufgedruckte Design sichtbar ist, von innen hingegen - aufgrund des Rasters der Sicht-Zwischenräume und der von innen sichtbaren dunklen Schicht - ein Blick nach außen ermöglicht wird.

Das beschriebene, vorbekannte Bedruckungsverfahren ist jedoch äußerst aufwendig und nur unter größten technischen Schwierigkeiten zu realisieren. Für den optischen Effekt ist es unerläßlich, daß die rasterförmigen Sicht-Zwischenräume scharfe Konturen aufweisen. Bei dem beschriebenen Verfahren müssen sämtliche drei Schichten absolut passgenau übereinandergedruckt werden, so daß die Ränder der Sicht-Zwischenräume in der Designschicht, in der hellen Schicht und in der dunklen Schicht exakt korrespondieren.

Die Aufgabe der vorliegenden Erfindung besteht darin, eine Mehrschichtfolie zur Beschichtung eines transparenten Substrats, insbesondere von Glas, anzugeben, mit der sich der optische Effekt wesentlich einfacher, zuverlässiger und besser erreichen läßt. Gleichzeitig soll ein Verfahren zum Herstellen einer solchen Mehrschichtfolie sowie ein Verfahren zum Beschichten eines transparenten Substrates mit einer solchen Mehrschichtfolie angegeben werden.

Diese Aufgaben werden in vorrichtungstechnischer Hinsicht mit einer Mehrschichtfolie nach den Merkmalen des Patentanspruchs 1 und in verfahrenstechnischer Hinsicht alternativ durch die Merkmale der Patentansprüche 15 oder 19 gelöst.

Vorteilhafte Weiterbildungen sind in den Unteransprüchen angegeben.

Ein besonderer Kerngedanke der vorliegenden Erfindung ist darin zu sehen, daß die Sicht-Zwischenräume durch einen Druckvorgang in der Mehrschichtfolie mit scharfen Konturen erzeugbar sind. Die Sicht-Zwischenräume werden mittels eines Rasters von Sperrelementen gedruckt, die zusammen eine Sperrschicht ausbilden. Die Sperrelemente der Sperrschicht sind aus einem Material mit einer vergleichsweise hohen Einbrenntemperatur ausgebildet. Eine Funktionsschicht, die beispielsweise als Dekorschicht ausgebildet sein kann, wird über die aus Sperrelementen gebildete Sperrschicht aufgebracht.

Die Funktionsschicht weist gegenüber der Sperrschicht eine niedrigere Einbrenntemperatur auf, so daß beim Einbrennen der Mehrschichtfolie auf ein transparentes Substrat vor allem die Funktionsschicht eine vorzugsweise keramische, klebende oder anderweitig wärmeinduzierte Verbindung mit dem transparenten Substrat ausbildet. Die Sperrschicht dagegen verbindet sich beim Einbrennen nicht oder nur kaum mit dem transparenten Substrat.

Erfindungsgemäß müssen die Einbrenntemperaturen der Funktionsschicht T_{f} und der Sperrschicht T₅ sinnvoll mit der Schmelz- bzw. Sintertemperatur des Substrats und der vorgesehenen Einbrenntemperatur T_{b} korrelieren.

Unter der Einbrenntemperatur T_{b} ist die Prozeßtemperatur zu verstehen, die an der Substrat-oberfläche herrscht, wenn die Mehrschichtfolie sich dauerhaft mit der Substratoberfläche verbindet.

Dabei liegt erfindungsgemäß die vorgesehene Einbrenntemperatur T_{b} unterhalb der Einbrenntemperatur der Sperrschicht Tₛ (T_{b}< Tₛ), so daß sich die Sperrschicht nicht oder nur kaum mit der Substratoberfläche verbindet und sich anschließend ohne weiteres entfernen läßt.

Unter den Einbrenntemperaturen Tₛ, T_{f} und T_{b} sind allgemein die jeweiligen Temperaturen zu verstehen, bei denen sich ein Aufschmelzen, Sintern oder wärmeinduziertes Verlieben ergibt. Die Einbrenntemperaturen sind so einzustellen, daß sich - im Gegensatz zu der Verbindung zwischen der Funktionsschicht und dem Substrat - zwischen der Sperrschicht und dem Substrat keine dauerhafte Verbindung ergibt.

Bevorzugte Anwendungsgebiete der vorliegenden Erfindung sind die Beschichtung von keramischen oder glasigen Substraten. Funktionsschicht und/oder Sperrschicht können auf anorganischer, insbesondere keramischer oder organischer Basis ausgebildet sein.

Als Substrat kämen auch andere Materialien, wie beispielsweise Kunststoffe oder Metall, in Frage.

Entsprechend der verschiedenen Materialien und der unterschiedlichen möglichen Haftmechanismen spannt sich der Bereich der Einbrenntemperatur T_{b} von ca. 80°C bis über 1.000°C.

Nach dem Einbrennen der Mehrschichtfolie lassen sich die Sperrelemente und die direkt darüber befindlichen Bereiche der Funktionsschicht ablösen, so daß die für den Effekt der Einwegsicht notwendigen Sicht-Zwischenräume mit scharfen Konturen, vorgegebenem Rand und definiertem Raster entstehen. Zu bemerken ist auch, daß die Sperrelemente nur eine lockere Verbindung mit der Funktionsschicht eingehen, so daß sich die Sperrelemente mit den darüber befindlichen Bereichen der Funktionsschicht nach dem Einbrennen der Mehrschichtfolie auf dem vorzugsweise transparenten Substrat mit definierten scharfen Konturen ausbrechen lassen.

Ein transparentes Substrat ist zur Erzielung des Einwegsicht-Effekts notwendig. Es sind auch Anwendungen ohne transparentem Substrat auf opakem Untergrund, z. B. auf Keramik denkbar zur Erzielung eines Matt-/Glanzeffektes. Dabei kann die Funktionsschicht die matte oder glänzende Funktion und entsprechend das Substrat die glänzende bzw. matte Funktion ausüben.

Erfindungsgemäß lassen sich mittels der Funktionsschicht auch andere physikalische Effekte als die Einwegsicht oder Glanzunterschiede erzielen, beispielsweise Leitfähigkeitseffekte.

Das erfindungsgemäße Verfahren zeichnet sich gegenüber dem vorbekannten dadurch aus, daß sich der gewünschte Effekt wesentlich einfacher und zuverlässiger erreichen läßt. Das Raster und die Form die Funktions-Zwischenräume bzw. Sicht-Zwischenräume müssen nach dem hier vorgeschlagenen Verfahren nur in einem einzigen Druckvorgang, nämlich beim Drucken der Sperrschicht, eingehalten werden. Bei den vorbekannten Verfahren müssen mehrere Schichten exakt übereinander gedruckt werden. Beim Drucken eines bevorzugten Ausführungsbeispiels nach der Erfindung ist die Funktionsschicht als Dekorschicht ausgebildet und umfaßt ein Bild- oder Farbmuster. Grundsätzlich sind aber auch andere Anwendungsfälle denkbar, bei denen eine Funktionsschicht auf einer Schicht mit einem definierten Raster von Zwischenräumen angeordnet ist.

Allgemein wird die Mehrschichtfolie zunächst auf einer Unterlage aufgebaut, wobei die Unterlage aus einem Träger und einer Trennschicht besteht. Vor dem Einbrennen der Mehrschichtfolie auf das transparente Substrat wird die Mehrschichtfolie von der Unterlage gelöst und auf das transparente Substrat übertragen. Damit die Mehrschichtfolie vor dem Einbrennvorgang selbst ausreichend stabil ist, sind Sperrschicht und Funktionsschicht so ausgebildet und aufeinander abgestimmt, daß sich ein ausreichender, gleichzeitig nicht zu fester Verbund zwischen Sperrschicht und Funktionsschicht ergibt. Dieser Verbund wird vor allem beim Einbrennvorgang ausgebildet, so daß die nach dem Einbrennvorgang abzulösenden Sperrelemente gemeinsam mit den darüber befindlichen Bereichen der Funktionsschicht ablösbar sind, sich gleichzeitig aber die Sperrelemente leicht von den auf dem transparenten Substrat verbleibenden Bereichen der Funktionsschicht ablösen lassen unter Ausbildung von scharfen Konturen.

In einer zweckmäßigen Ausgestaltung umfaßt die Dekorschicht eine Designschicht mit einem bestimmten Design, Bild oder Muster und eine Deckschicht.

Je nachdem ob die Deckschicht der Sperrschicht und damit dem transparenten Substrat zugewandt oder abgewandt ist, entsteht ein beschichtetes transparentes Substrat in einem Aufglas- oder Hinterglasverfahren. Im ersten Fall liegt aus Sicht eines Betrachters die Designschicht auf dem transparenten Substrat, im letzten Fall hinter dem transparenten Substrat.

Zur Erhöhung der Brillanz und zur Verstärkung des Einwegeffektes umfaßt die Deckschicht eine der Designschicht zugewandte helle Schicht und eine dunkle Schicht. Die helle Schicht in der Deckschicht ist keineswegs notwendig, sondern insbesondere beim Vierfarbdruck als vorteilhafte Ausgestaltung anzusehen.

In einer zweckmäßigen Weiterbildung sind Einbrenntemperaturen der Sperrschicht und der Funktionsschicht so vorgewählt, daß sich das Einbrennen der Mehrschichtfolie auf das transparente Substrat, insbesondere auf eine Sicherheitsglasscheibe, gleichzeitig mit dem für die Erzeugung von Sicherheitsglas notwendigen Erhitzungsprozeß durchführen läßt. Damit ist für das Aufbringen der Mehrschichtfolie auf Fenster von Kraftfahrzeugen oder Fahrzeugen öffentlicher Verkehrsmittel kein separater Erhitzungsprozeß mehr notwendig. Vielmehr kann die Mehrschichtfolie in dem ohnehin notwendigen Prozeß zur Erzeugung von Sicherheitsglas aufgebracht werden.

In einer bevorzugten Ausgestaltung werden die Sperrelemente der Sperrschicht aus hochschmelzenden Oxyden oder hochschmelzenden Silikaten gebildet.

Die Dekorschicht besteht zweckmäßigerweise aus keramischem Flußmittel und färbenden Metalloxyden.

Um eine besonders homogene Dekorschicht auszubilden, sollten die Einbrenntemperaturen der Designschicht, der hellen Schicht und der dunklen Schicht aufeinander abgestimmt werden, wobei sie vorzugsweise einander im wesentlichen angeglichen sein sollten.

Das Verfahren zum Herstellen einer Mehrschichtfolie zur Beschichtung eines transparenten Substrats umfaßt wenigstens die folgenden Schritte:
Aufdrucken einer Sperrschicht mit einer Vielzahl von in einem Raster angeordneten Sperrelementen auf eine Unterlage, wobei die Sperrelemente vorzugsweise alle die gleiche Form und Größe aufweisen und in der gleichen Ausrichtung zueinander angeordnet sind;
Aufbringen einer auf einem transparenten Substrat einbrennbaren Funktionsschicht auf die aus Sperrelementen bestehende Sperrschicht;
Einbrennen der Mehrschichtfolie auf das transparente Substrat;
Entfernen der eingebrannten Mehrschichtfolie in Bereichen der Sperrelemente unter Ausbildung von Sicht-Zwischenräumen

Im Gegensatz zum Stand der Technik wird hier das für die Einwegsicht notwendige Raster in einem einzigen Druckverfahren erzeugt. Das Entfernen der eingebrannten Mehrschichtfolie in Bereichen der Sperrelemente unter Ausbildung von Sicht-Zwischenräumen kann unter Zuhilfenahme von mechanischen Mitteln (Abbürsten etc.) oder auf chemischem Wege erfolgen.

In einer bevorzugten Ausgestaltung wird die Mehrschichtfolie zunächst auf einer Unterlage aufgebaut, so daß die so präparierte Mehrschichtfolie lagerbar, transportierbar und insbesondere selbständig vertreibbar ist. Vor dem Einbrennen der Mehrschichtfolie auf das transparente Substrat muß lediglich die Unterlage, die einen Träger und eine Trennschicht umfaßt, von der Mehrschichtfolie gelöst werden.

In einer bevorzugten Ausgestaltung wird die Funktionsschicht in mehreren Schritten erzeugt, wobei auf die Sperrschicht zum Überdecken der Sperrelemente und der Funktionszwischenräume eine Deckschicht aufgedruckt wird und schließlich auf die Deckschicht eine Designschicht aufgebracht wird, wobei auch die Designschicht aus zwei oder mehr Schichten gebildet sein kann.

Soll ein Hinterglasdesign erzeugt werden, wird auf die aus Sperrelementen und Funktionszwischenräumen gebildete Sperrschicht zunächst die Designschicht aufgedruckt und anschließend auf die Designschicht eine vorzugsweise dunkle Deckschicht.

Das Verfahren zum Beschichten eines transparenten Substrats, insbesondere Glas, mit einer erfindungsgemäßen Mehrschichtfolie umfaßt die folgenden Schritte:
Aufbringen der Mehrschichtfolie auf das transparente Substrat, wobei die Sperrschicht der Mehrschichtfolie auf die Oberfläche des zu beschichtetenden Substrats gelegt wird,
Einbrennen der Mehrschichtfolie auf die Oberfläche des Substrats bei einer Temperatur T_{b} von mindestens 500°C.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Fig. 1: eine Ausführungsform einer auf einer ablösbaren Unterlage aufgedruckten Mehrschicht folie,
- Fig. 2: die bereits auf ein transparentes Substrat übertragene Mehrschichtfolie nach Fig. 1 während des Einbrennvorgangs,
- Fig. 3: die Mehrschichtfolie nach Fig. 2 nach Entfernen der Sperrelemente und der darüber angeordneten Bereiche der Funktionsschicht unter Ausbildung von Sicht-Zwischenräumen,
- Fig. 4: eine alternative Ausführungsform einer auf einem transparenten Substrat aufgebrachten Mehrschichtfolie während des Einbrennvorgangs.

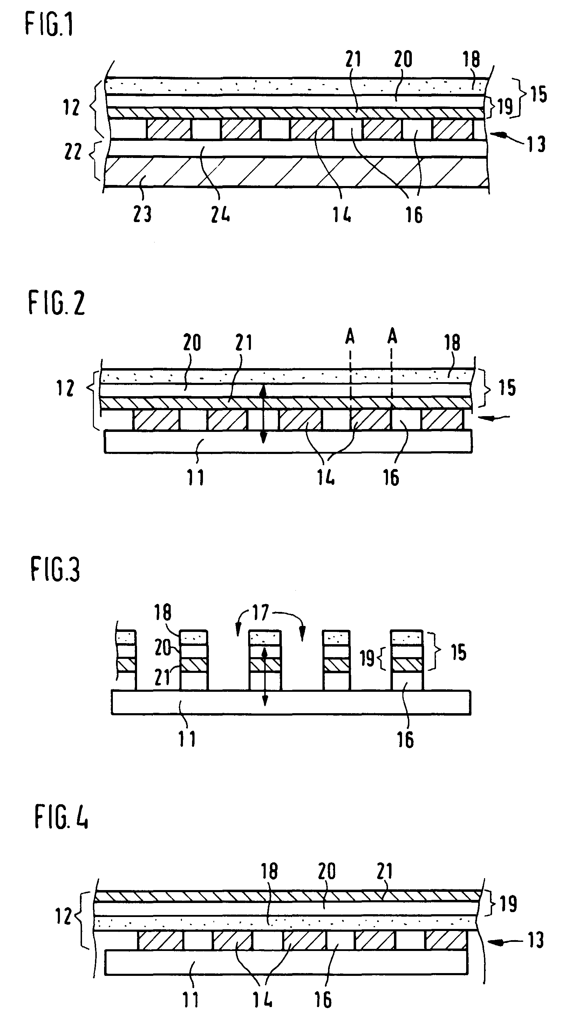

In Fig. 1 ist eine erste Ausführungsform einer auf einer ablösbaren Unterlage aufgebauten Mehrschichtfolie schematisch dargestellt. Bei dem nachstehend beschriebenen Ausführungsbeispiel wird eine Mehrschichtfolie 12 auf keramischer Basis auf ein Substrat 11 aus Glas aufgebracht. Die Unterlage 22 umfaßt einen Träger 23 und eine Trennschicht 24. Der Träger 23 kann beispielsweise aus Papier oder Karton bestehen. Für die Ausbildung der Trennschicht sind dem Fachmann verschiedene Lösungen bekannt.

Die auf der Unterlage 22 aufgebrachte Mehrschichtfolie 12 weist, ausgehend von der Unterlage 22, zunächst eine Sperrschicht 13 auf. Die Sperrschicht 13 umfaßt eine Vielzahl von in einem definierten Raster angeordneten Sperrelementen 14. Die in einem definiertem Raster angeordneten Sperrelemente 14 weisen vorzugsweise gleiche Formen und Abmessungen auf und sind relativ zueinander gleich ausgerichtet. Die Vielzahl von Sperrelementen kann diskret oder miteinander verbunden sein. In einer besonders einfachen aber zweckmäßigen Ausgestaltung weisen die Sperrelemente 14 in Schichtebene jeweils einen kreisrunden Querschnitt auf. Die Sperrelemente könnten in Schichtebene aber auch oval, sechseckig, quadratisch, rautenförmig, als gleichschenkliges Dreieck oder in nahezu jeder anderen beliebigen Form ausgebildet sein. In einigen Anwendungsfällen könnte es auch interessant sein, bei den Sperrelementen 14 das Logo einer Firma nachzuempfinden.

Bei dem hier beschriebenen Verfahren können auch unregelmäßige Raster gedruckt werden, beispielsweise frequenz-modulierte Raster (FM-Raster).

Die sich im Raster der Sperrelemente ergebenden Zwischenräume werden hier als Funktionszwischenräume 16 bezeichnet. In vielen der vorgenannten Beispiele grenzen die Funktionszwischenräume 16 aneinander an bzw. bilden einen einzigen gesamten Zwischenraum.

Die die Sperrelemente14 umfassende Sperrschicht 13 wird in einem Druckverfahren auf die Unterlage 22 aufgebracht. Das Druckverfahren ermöglicht ein genaues Einhalten des vorgegebenen Rasters sowie eine leichte Umstellung auf verschiedene geometrische Formen, Abstände und Ausrichtungen der Sperrelemente 14.

Auf die Sperrschicht 13 wird eine Funktionsschicht 15 aufgedruckt.

Die Funktionsschicht 15 ist hier als Dekorschicht 15 ausgebildet und umfaßt in der dargestellten Ausführungsform von der Sperrschicht 13 her betrachtet eine dunkle Schicht 21, eine helle Schicht 20 und eine Designschicht 18. Die dunkle Schicht 21 und die helle Schicht 20 bilden gemeinsam eine Deckschicht 19, die einerseits die Brillanz der Designschicht 18 erhöht und andererseits den Effekt der Einwegsicht verstärkt. Die Designschicht 18, die helle Schicht 20 und die dunkle Schicht 21 werden nacheinander auf die Sperrschicht aufgedruckt. Sie weisen vorzugsweise annähernd die gleiche Einbrenntemperatur auf. Die Designschicht selbst umfaßt in der konkreten Ausgestaltung keramisches Flußmittel und färbende Metalloxyde.

In Fig. 2 ist die bereits auf ein transparentes Substrat 11 übertragene Mehrschichtfolie 12 während des Einbrennvorgangs dargestellt. Die Mehrschichtfolie 12 wurde zuvor von der Unterlage 22 gelöst und ist direkt mit der Sperrschicht 13 auf das transparente Substrat 11 aufgelegt. Durch die erfindungsgemäße Abstimmung der Einbrenntemperaturen bildet die Funktionsschicht 15 während des Einbrennvorgangs mit dem keramischen Substrat 11 eine keramische Verbindung aus (vgl. Doppelpfeil in Fig. 2). Die Sperrelemente 14 dagegen weisen eine derart hohe Einbrenntemperatur auf, daß sie praktisch keine Verbindung mit dem darunter liegenden transparenten Substrat 11 eingehen.

Während des Einbrennvorgangs bildet sich jedoch eine gewisse keramische Verbindung zwischen den Sperrelementen 14 und den darüber liegenden Bereichen der Funktionsschicht 15 (strichlierte Linien A in Fig. 2) aus.

Nach dem Einbrennvorgang lassen sich die Sperrelemente 14 zusammen mit den jeweils darüber befindlichen Bereichen der Funktionsschicht 15 auf einfache Weise, beispielsweise mechanisch, entfernen. Dies kann etwa durch Bürsten, Druckluft oder unter Einsatz eines Wasserstrahls erfolgen.

Nach Entfernen der Sperrelemente mit den darüber befindlichen Bereichen der Funktionsschicht 15 bilden sich - wie in Fig. 3 gezeigt - in der bereits auf dem transparenten Substrat 11 eingebrannten Mehrschichtfolie 12 Sicht-Zwischenräume 17 in dem vordefinierten Raster, mit der vordefinierten Gestalt und Ausrichtung aus. Die Sperrelemente 14 haben sich zusammen mit den darüber befindlichen Bereichen der Funktionsschicht auf definierte Weise ablösen lassen, so daß der Rand der Sicht-Zwischenräume 17 durch scharfe Konturen begrenzt wird, was den Effekt der Einwegsicht noch verstärkt.

In Fig. 4 ist eine alternative Ausgestaltung einer auf einem transparenten Substrat 11 aufgebrachten Mehrschichtfolie während des Einbrennvorgangs dargestellt. Die Mehrschichtfolie nach Fig. 4 unterscheidet sich von der nach Fig. 2 dadurch, daß hier die Funktions- bzw. Dekorschicht 15 in umgekehrter Ausrichtung auf die Sperrschicht 13 aufgedruckt sind. In dieser Ausgestaltung wird zunächst die Designschicht 18 auf die Sperrschicht 13 aufgedruckt. Auf die Designschicht 18 wird dann die helle Schicht 20 und anschließend die dunkle Schicht 21 aufgebracht. Auf diese Weise befindet sich die Designschicht 18 zwischen der dunklen Schicht 21 und dem transparenten Substrat 11, so daß hier ein beschichtetes Substrat nach Art eines Hinterglasbildes entsteht.

Mit der beschriebenen Mehrschichtfolie bzw. dem beschriebenen Verfahren läßt sich ein transparentes Substrat in einem bestimmten Raster mit einer Designschicht und einer Deckschicht erzeugen, wobei zur Festlegung des Rasters nur ein einziger Druckvorgang notwendig ist. Zur Ausbildung des Rasters sind keine auf die Mehrschichtfolie einwirkenden Werkzeuge notwendig. Die für die Ausbildung des Rasters notwendigen Sperrelemente lassen sich ohne weiteres in Form, Größe und Ausrichtung variieren. Das erfindungsgemäße Verfahren ist daher äußerst vielseitig und für verschiedenste Anwendungsfälle einsetzbar.

### Bezugszeichenliste

- 11: Substrat
- 12: Mehrschichtfolie
- 13: Sperrschicht
- 14: Sperrelemente
- 15: Funktions-/Dekorschicht
- 16: Funktions-Zwischenräume
- 17: Sicht-Zwischenräume
- 18: Designschicht
- 19: Deckschicht
- 20: helle Schicht
- 21: dunkle Schicht
- 22: Unterlage
- 23: Träger
- 24: Trennschicht

## Patentansprüche

1. Mehrschichtfolie zur Beschichtung eines vorzugsweise transparenten Substrats (11), insbesondere Glas, wobei die Mehrschichtfolie (12) folgende Schichten umfaßt:
- eine Sperrschicht (13) mit Sperrelementen (14),
wobei die Sperrelemente (14) im wesentlichen die gleiche Form und Größe aufweisen und unter Ausbildung von definierten Funktions-Zwischenräumen (16) angeordnet sind
und
- eine Funktionsschicht (15),
wobei die Mehrschichtfolie (12) so auf das Substrat (11) aufbrennbar ist, daß die Sperrschicht (13) direkt am Substrat (11) anliegt,
wobei die Sperrschicht (13) und die Funktionsschicht (15) so ausgebildet und auf einander abgestimmt sind,
daß die Einbrenntemperatur der Sperrschicht Tₛ höher als die Einbrenntemperatur T_{f} der Funktionsschicht (15) ist.

2. Mehrschichtfolie nach Anspruch 1,
**dadurch gekennzeichnet,**
daß die Funktionsschicht als Dekorschicht (15) ausgebildet ist und ein Bild- oder Farbmuster umfaßt.

3. Mehrschichtfolie nach Anspruch 1 oder 2,
**dadurch gekennzeichnet,**
daß die Sperrschicht (13) und die Funktionschicht (15) so ausgebildet und aufeinander abgestimmt sind, daß sich ein Verbund zwischen Sperrschicht (13) und Funktionsschicht (15) ergibt.

4. Mehrschichtfolie nach einem der Ansprüche 1 bis 3,
**dadurch gekennzeichnet,**
daß die Sperrschicht (13) und die Funktionsschicht (15) so ausgebildet und aufeinander abgestimint sind, daß sich der Verbund zwischen Sperrschicht (13) und Funktionsschicht (15) beim Aufbrennen der Mehrschichtfolie (12) auf das transparente Substrat bei einer Einbrenntemperatur T_{b} ergibt, die über der Einbrenntemperatur der Funktionsschicht (15) liegt.

5. Mehrschichtfolie nach einem der Ansprüche 1 bis 4,
**dadurch gekennzeichnet,**
daß die Sperrschicht (13) und die Funktionsschicht (15) so ausgebildet und aufeinander abgestimmt sind, daß nach dem Aufbrennen der Mehrschichtfolie (12) die Bereiche der Funktionsschicht (15) oberhalb der Sperrelemente (14), der Sperrschicht (13) zusammen mit den Sperrelementen (14) unter Ausbildung von Sicht-Zwischenräumen (17) entfernbar sind.

6. Mehrschichtfolie nach einem der Ansprüche 1 bis 5,
**dadurch gekennzeichnet,**
daß die Dekorschicht (15) eine Designschicht (18) und eine Deckschicht (19) aufweist.

7. Mehrschichtfolie nach einem der Ansprüche 1 bis 6,
**dadurch gekennzeichnet,**
daß bei der Dekorschicht (15) die Deckschicht (19) der Sperrschicht (13) zugewandt ist.

8. Mehrschichtfolie nach einem der Ansprüche 1 bis 6,
**dadurch gekennzeichnet,**
daß bei der Dekorschicht (15) die Designschicht (18) der Sperrschicht (13) zugewandt ist.

9. Mehrschichtfolie nach einem der Ansprüche 1 bis 8,
**dadurch gekennzeichnet,**
daß die Deckschicht (19) eine der Designschicht (18) zugewandte helle Schicht (20) und eine dunkle Schicht (21) aufweist.

10. Mehrschichtfolie nach einem der Ansprüche 1 bis 9,
**dadurch gekennzeichnet,**
daß die Sperrschicht (13) und die Funktionsschicht (15) so ausgebildet und aufeinander abgestimmt sind, daß die Mehrschichtfolie (12) in dem für die Erzeugung von Sicherheitsglas notwendigen Erhitzungsprozess auf das Substrat (11) aufbringbar ist.

11. Mehrschichtfolie nach einem der vorhergehenden Ansprüche,
**dadurch gekennzeichnet,**
daß die Sperrelemente (14) der Sperrschicht (13) aus hochschmelzenden Oxyden oder hochschmelzenden Silikaten gebildet sind.

12. Mehrschichtfolie nach einem der vorhergehenden Ansprüche,
**dadurch gekennzeichnet,**
daß die Dekorschicht (15) aus keramischem Flußmittel und färbenden Metalloxyden besteht.

13. Mehrschichtfolie nach einem der Ansprüche 1 bis 12,
**dadurch gekennzeichnet,**
daß die Designschicht (18), die helle Schicht (20) und die dunkle Schicht (21) von ihren Einbrenntemperaturen her aufeinander abgestimmt sind,
wobei vorzugsweise die Einbrenntemperaturen der Schichten im wesentlichen gleich sind.

14. Beschichtetes Glas, umfassend eine Mehrschichtfolie nach einem der Ansprüche 1 bis 13,
**dadurch gekennzeichnet,**
daß die Mehrschichtfolie auf ein aus Glas bestehendes Substrat (11) aufgebracht ist.

15. Verfahren zum Herstellen einer Mehrschichtfolie (12) zur Beschichtung eines transparenten Substrats (11), umfassend die folgenden Schritte:
- Aufdrucken einer Sperrschicht (13) mit einer Vielzahl von in einem Raster angeordneten Sperrelementen (14) auf eine Unterlage (22).
- Aufbringen einer auf einem transparenten Substrat einbrennbaren Funktionsschicht (15) auf die aus Sperrelementen (14) bestehende Sperrschicht (13).
- Einbrennen der Mehrschichtfolie (12) auf das transparente Substrat.
- Entfernen der eingebrannten Mehrschichtfolie (12) in Bereichen der Sperrelemente (14) unter Ausbildung von Sicht-Zwischenräumen (17).

16. Verfahren nach Anspruch 15,
**dadurch gekennzeichnet,**
daß die Sperrschicht (13) auf eine aus einem Träger (23) und einer der Sperrschicht (13) zugewandten Trennschicht (24) bestehenden Unterlage (22) aufgebracht, insbesondere aufgedruckt wird, wobei die Unterlage (22) vor dem Einbrennen der Mehrschichtfolie (12) auf dem transparenten Substrat entfernt wird.

17. Verfahren nach Anspruch 15 oder 16,
**dadurch gekennzeichnet,**
daß das Aufbringen der Funktionschicht (15) die folgenden Schritte umfaßt:
- Aufdrucken einer Deckschicht (19) zum Überdecken der Sperrelemente (14) und der Funktions-Zwischenräume (16) und
- Aufdrucken einer Designschicht (18) auf die Deckschicht (19).

18. Verfahren nach Anspruch 15 oder 16,
**dadurch gekennzeichnet,**
daß das Aufbringen der Funktionsschicht (15) die folgenden Schritte umfaßt:
- Aufdrucken einer Designschicht (18) auf die Sperrelemente (14) und die Funktions-Zwischenräume (16) und
- Aufdrucken einer Deckschicht (19) auf die Designschicht (18).

19. Verfahren zum Beschichten eines transparenten Substrats, insbesondere aus Glas, umfassend die folgenden Schritte:
- Aufbringen einer Mehrschichtfolie (12) nach einem der Ansprüche 1 bis 11 auf ein Substrat (11),
wobei die Sperrschicht (13) der Mehrschichtfolie (12) auf die zu beschichtende Oberfläche des Substrats (11) gelegt wird,
- Einbrennen der Mehrschichtfolie auf die Oberfläche des Substrats bei einer Einbrenntemperatur T_{b} > 500°C.
